# EUROPÄISCHE PATENTSCHRIFT

(11) **EP 1 854 359 B1**
(45) Veröffentlichungstag und Bekanntmachung des Hinweises auf die Patenterteilung: **21.10.2009**
(21) Anmeldenummer: 07075650.7
(22) Anmeldetag: 03.08.2002
(51) Int. Cl.: A22C 25/04, A22C 25/08

(54) **Mittel zur Verknüpfung einer zentralen Zuführungseinrichtung mit einer Verarbeitungsmaschine sowie eine Anlage und ein Verfahren zur automatisierten Verarbeitung von Fisch**
Device for linking a central feed device with a processing machine and facility and method for automatic processing of fish
Moyen destiné à combiner un dispositif d'introduction central avec une machine de traitement, installation et un procédé destinés au traitement automatique du poisson

(30) Priorität: 03.08.2001 DE 10137651
(43) Veröffentlichungstag der Anmeldung: 14.11.2007
(62) Teilanmeldung aus: 02776919.9
(73) Patentinhaber: Nordischer Maschinenbau Rud. Baader GmbH + Co. KG, 23560 Lübeck (DE)
(72) Erfinder: Großeholz, Werner, 23628 Krummesse (DE); Paulsohn, Carsten, 23566 Lübeck (DE); Peters, Manfred, 23611 Bad Schwartau (DE); Dann, Andreas, 23569 Lübeck (DE)
(74) Vertreter: Wenzel & Kalkoff

(56) Entgegenhaltungen:
- EP-A- 0 487 789
- WO-A-00/48909
- DD-A1- 145 054
- DE-A1- 1 481 318
- DE-B- 1 292 338

## Beschreibung

Die Erfindung betrifft ein Mittel zur Verknüpfung einer zentralen Zuführeinrichtung mit einer Verarbeitungsmaschine zum Verarbeiten von Fischen, wobei das Mittel derart ausgebildet ist, dass die Fische von der Zuführeinrichtung über das Mittel zur jeweiligen Eingabeposition der Verarbeitungsmaschine gelangen. Des Weiteren betrifft die Erfindung eine Anlage zum Aufbereiten und Verarbeiten von Fischen, insbesondere zum Schlachten und Entweiden derselben, im wesentlichen umfassend: a) eine Transporteinrichtung für Fische, b) einen zentralen Vorratstank zur Aufnahme bzw. zum Sammeln der zugeführten Fische sowie c) mindestens zwei Verarbeitungsmaschinen zum Verarbeiten von Fischen, d) eine zentrale Zuführeinrichtung zum kontinuierlichen Zuführen der Fische zu jeder Verarbeitungsmaschine, wobei e) die Zuführeinrichtung im Bereich jeder Verarbeitungsmaschine zum Verarbeiten der Fische Mittel zur Übergabe der Fische von der Zuführeinrichtung zu jeder Verarbeitungsmaschine aufweist. Die Erfindung betrifft auch ein Verfahren zur automatisierten Verarbeitung von Fischen, im wesentlichen umfassend die folgenden Schritte: Zuführen und Sammeln der Fische in einem zentralen Vorratstank, Vereinzeln der Fische, manuelles Ausrichten der Fische in eine definierte Lage, automatisiertes Verarbeiten der Fische, wobei die Fische vor dem automatisierten Verarbeiten auf einer zentralen Zuführeinrichtung abgelegt und ausgerichtet und dann in den Bereich der ausgewählten Verarbeitungsmaschine transportiert werden.

Bekannte Anlagen verfügen über eine einzelne Verarbeitungsmaschine, beispielsweise eine Vorrichtung zum Schlachten und Entweiden der Fische, wie sie aus dem Dokument DE 198 29 376 bekannt ist. Unmittelbar an dieser Vorrichtung befindet sich eine Vorratsmulde zur Aufnahme und zum Sammeln der über die Transporteinrichtung in die Vorratsmulde geförderten Fische. Eine Bedienperson entnimmt der Vorratsmulde nun einzeln die an der Vorrichtung zu verarbeitenden Fische und führt diese der Vorrichtung in einer definierten Lage/Position zu. Das Schlachten und Entweiden erfolgt dann automatisch durch die Vorrichtung. Es gibt jedoch bereits Anlagen, bei denen mehrere Maschinen in einer Anlage zusammengefasst worden sind, wobei die einzelnen Maschinen über ein zentrales Zuführband mit Fisch versorgt werden. Die Fische werden an den einzelnen Maschinen vom Zuführband geleitet und einer Vorratsmulde zugeführt. In dieser Vorratsmulde liegen die Fische ungeordnet und müssen erneut vereinzelt und ausgerichtet werden. Hierzu ist an jeder Maschine eine Bedienperson erforderlich. Ein Mittel zur Verknüpfung einer zentralen Zuführeinhchtung mit einer Verarbeitungsmaschine mit den Merkmalen des Oberbegriffs des Anspruches 1 ist aus der DD-A-145 054 bekannt. Die bekannten Anlagen und Verfahren weisen jedoch gemeinsam den Nachteil auf, dass sie sehr personalintensiv ist, da mindestens an jeder Vorrichtung in einer Anlage eine Bedienperson erforderlich ist, um ein paralleles Bestücken der Vorrichtungen mit Fisch zu ermöglichen. Ein kontinuierlicher Verfahrensablauf ist demnach kostenintensiv.

Der Erfindung liegt damit die Aufgabe zugrunde, ein Mittel zu schaffen, das eine Schnittstelle zwischen einer zentralen Zuführeinrichtung und einer Verarbeitungsmaschine schafft. Des Weiteren ist es Aufgabe der Erfindung, eine Anlage zu schaffen, mit der eine kontinuierliche Verarbeitung von Fischen an mehreren Verarbeitungsmaschinen gleichzeitig gewährleistet ist, wobei die Verarbeitung mit einem reduzierten Personalaufwand realisiert werden soll. Des Weitere ist es Aufgabe der Erfindung, ein entsprechendes Verfahren vorzuschlagen.

Die Aufgabe wird mit einem Mittel mit den eingangs erwähnten Merkmalen dadurch gelöst, dass das Mittel aus einem Vorratspuffer und einer Eintakteinheit gebildet ist, wobei der Vorratspuffer mehrere Taschen aufweist und jede Tasche zur Speicherung eines Fisches ausgebildet ist und die einzelnen Taschen durch schwenkbare Klappen, Schieber oder dergleichen voneinander getrennt sind. Damit ist auf überraschend einfache Weise eine Schnittstelle geschaffen, die eine kontinuierliche Beschickung, nachgeordneter Verarbeitungsmaschinen gewährleistet. Durch die Taschen können insbesondere Unregelmäßigkeiten in der Zuführung der Fische ausgeglichen werden. Durch die Klappen wird sichergestellt, dass die Fische in ihrer vereinzelten Lage/Position verbleiben, so dass die Zuführung bzw. die Einführung der Fische in die Verarbeitungsmaschinen ohne weiteren Eingriff durch eine Bedienperson erfolgen kann.

Die Aufgabe wird auch durch eine Anlage mit den eingangs genannten Merkmalen dadurch gelöst, dass das Mittel nach einem der Ansprüche 1 bis 13 ausgebildet ist. Bezüglich sich der daraus ergebenden Vorteile wird auf die Ausführungen zum Mittel selbst verwiesen. Diese erfindungsgemäße Anlage ermöglicht erstmals, dass mehrere Verarbeitungsmaschinen gleichzeitig eingesetzt werden können, wobei sämtliche an die Zuführeinrichtung angeschlossenen Verarbeitungsmaschinen durch eine einzige Bedienperson bedient werden. Nach dem Auflegen der Fische auf die Zuführeinrichtung realisieren die Zuführeinrichtung und das Mittel zur Übergabe in gemeinsamer Abstimmung das automatisierte Befüllen/Versorgen der angeschlossenen Verarbeitungsmaschinen.

Vorteilhafterweise verfügt die Anlage über eine zentrale Rechnereinheit zur Steuerung und/oder Regelung, mittels der sämtliche Komponenten nach Bedarf und/oder Priorität und/oder Position steuer- und/oder regelbar sind. Dadurch ist gewährleistet, dass die Anlage individuell abgestimmt werden kann, um einen kontinuierlichen Verfahrensablauf, insbesondere ohne Stillstandszeiten der einzelnen Verarbeitungsstationen zu erreichen.

Auch wird die der Erfindung zugrunde liegende Aufgabe durch ein Verfahren zusammen mit den oben genannten Schritten dadurch gelöst, dass die Fische von der Zuführeinrichtung durch einen Abweiser von der Zuführeinrichtung auf ein Mittel zur Übergabe an die Verarbeitungsmaschine gelenkt werden, wobei die Fische in einem Vorratspuffer des Mittels in einzelnen Aufnahmen, die durch schwenkbare Klappen, Schieber oder dergleichen voneinander getrennt sind, gespeichert werden, und die Fische dann nach Bedarf und Priorität über eine Eintakteinheit des Mittels aktiv zur jeweiligen Verarbeitungsmaschine geschleust werden. Bezüglich der sich daraus ergebenden Vorteile wird zur Vermeidung von Wiederholungen auf obige Ausführungen verwiesen.

Eine vorteilhafte Weiterbildung des erfindungsgemäßen Verfahrens ist weiterhin dadurch gekennzeichnet, dass mittels Überwachungsmitteln sowie einer übergeordneten Rechnereinheit zur Steuerung und/oder Regelung sämtlicher Komponenten anhand von Bedarfsmeldungen und/oder Prioritätsbefehlen der Zuführeinrichtung und/oder der Verarbeitungsmaschinen und/oder Mitteln zur Übergabe bestimmt wird, wo der jeweils nächste Fisch abgelegt wird. Dadurch wird sichergestellt, dass die Verarbeitungsmaschinen permanent mit Fischen versorgt werden können. So kann beispielsweise die örtlich am weitesten vom zentralen Vorratstank angeordnete Verarbeitungsmaschine eine bevorzugte Priorität erhalten, weil die Zuführung im Vergleich zu näher positionierten Verarbeitungsmaschinen mehr Zeit in Anspruch nimmt.

Vorteilhafterweise werden die Fische nach einer Beruhigungszeit in eine nachfolgende Aufnahme in Richtung der Verarbeitungsmaschine geleitet, sofern das Überwachungsmittel der nachfolgenden Aufnahme Bedarf gemeldet hat. Bedarf bedeutet in diesem Zusammenhang, dass die Aufnahme leer ist und auf den nächsten Fisch wartet. Durch diese bedarfs- und prioritätsgesteuerte Abwicklung des Verfahrens sind zumindest immer in der der Verarbeitungsstation nächsten Aufnahme Fische angeordnet, die ein kontinuierliches Zuführen in die Verarbeitungsstation sicherstellen.

Weitere bevorzugte Merkmale und/oder Verfahrensschritte sind den Unteransprüchen und der Beschreibung zu entnehmen. Besonders bevorzugte Weiterbildungen, Ausführungsformen und Verfahrensschritte werden anhand der beigefügten Zeichnung näher erläutert. In der Zeichnung zeigt:
- Fig. 1: eine erste Anlage gemäß der Erfindung mit drei Verarbeitungsmaschinen,
- Fig. 2: ein Förderelement zur Verbindung der Zuführeinrichtung mit den Verarbeitungsstationen, wie in Figur 1 dargestellt,
- Fig. 3: eine weitere Anlage gemäß der Erfindung mit drei Verarbeitungsmaschinen,
- Fig. 4: eine weitere Anlage gemäß der Erfindung mit drei Verarbeitungsmaschinen, und
- Fig. 5: ein schematische Darstellung eines Schaltplans zur Steuerung/Regelung der Anlage gemäß Figur 1.

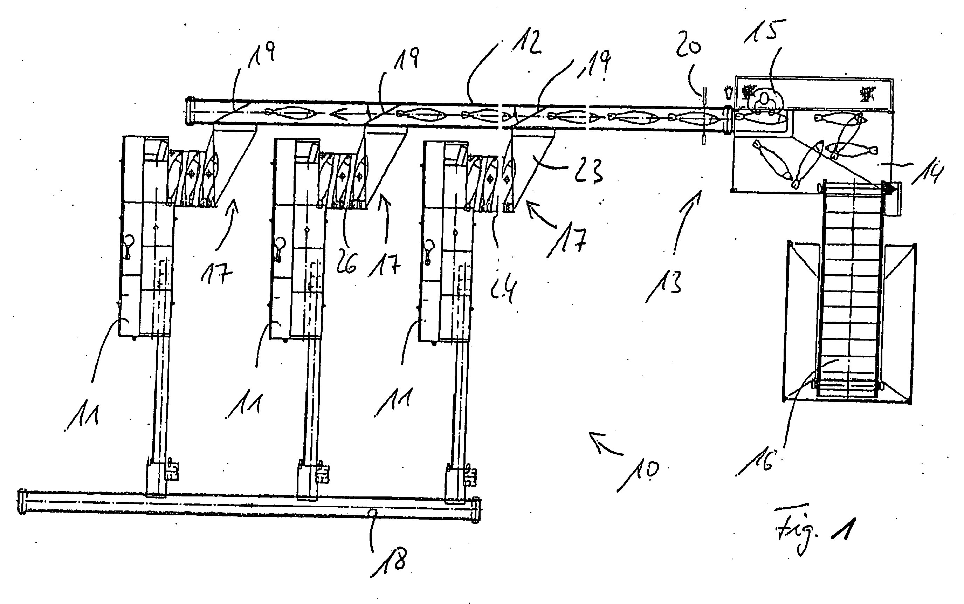

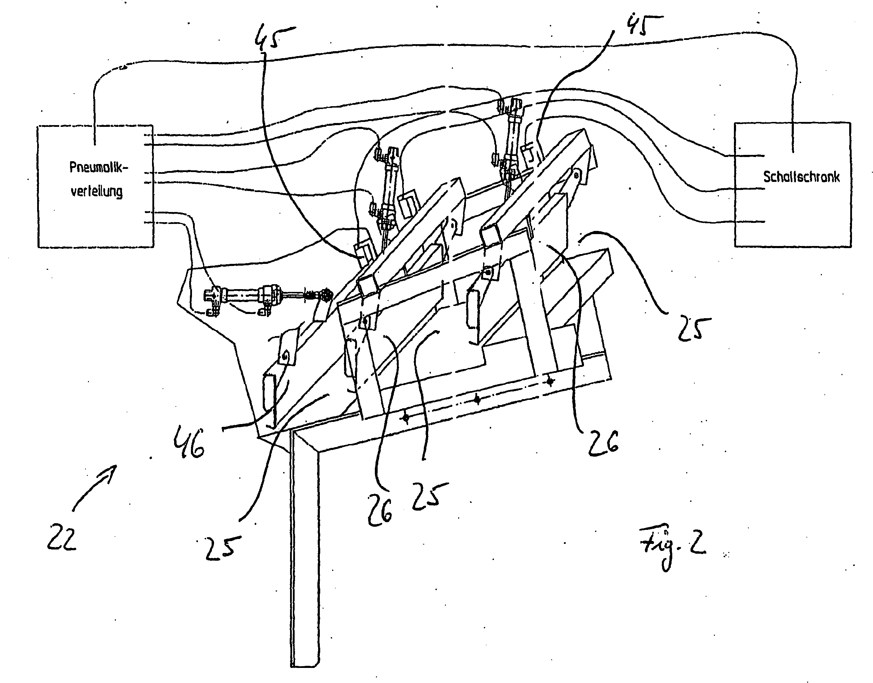

Die in den Figuren dargestellten Anlagen dienen zum Verarbeiten von Fischen. Vorzugsweise sind die Anlagen zum Schlachten und Entweiden geköpfter und ungeköpfter Fische vorgesehen. Die Ausführungsformen gemäß der Figuren 1 und 2 dienen lediglich der prinzipiellen Beschreibung wesentlicher Komponenten der Anlagen und fallen nicht in den Schutzbereich der Ansprüche.

In der Figur 1 ist eine Anlage 10 dargestellt, in der drei Verarbeitungsmaschinen 11 parallel zueinander angeordnet sind. Die Verarbeitungsmaschinen 11 sind über eine zentrale Zuführeinrichtung, die als Zuführband 12 ausgebildet ist, miteinander verbunden. Im Einlegebereich 13 des Zuführbandes 12 ist ein zentraler Vorratstank 14 angeordnet, aus dem eine Bedienperson 15 die Fische entnehmen kann. Der Vorratstank 14 ist über eine Transporteinrichtung 16 mit Fischen befüllbar. Die Verarbeitungsmaschinen 11 sind mit dem Zuführband 12 über Mittel 17 zur Übergabe der Fische verbunden. Im Ausgabebereich der Verarbeitungsmaschinen 11 ist ein Abführband 18 zum Abtransport der geschlachteten und entweideten Fische angeordnet.

Die Anlage 10 verfügt über eine (nicht dargestellte) Rechnereinheit zur Steuerung und/oder Regelung, mittels der sämtliche Komponenten nach Bedarf und/oder Priorität und/oder Position steuer- und/oder regelbar sind. Die Rechnereinheit ist frei programmierbar, so dass auch individuelle Anpassungen, beispielsweise bedingt durch eine Erweiterung der Anlage 10 um eine oder mehrere Verarbeitungsmaschinen 11, möglich sind.

Das Zuführband 12 weist steuer- und/oder regelbare Abweiser 19 auf, mittels der die Fische von dem Zuführband 12 in Richtung der jeweils angesteuerten Verarbeitungsmaschine 11 lenkbar sind. Die Abweiser 19 sind in der gezeigten Ausführungsform als schwenkbare Klappen ausgebildet. Auch andere Betätiger, wie z.B. Schieber oder Mitnehmer können zum Fördern der Fische vom Zuführband 12 vorgesehen sein. Entscheidend ist, dass die Fische einen Impuls quer zur Längsrichtung des Zuführbandes 12 erhalten, der groß genug ist, um die Fische zu bewegen. Des weiteren weist das Zuführband 12 (nicht dargestellte) Bandmarkierungen auf, die ein positions- und lagegenaues Auflegen der Fische auf das Zuführband 12 ermöglichen und erleichtern. Im Bereich des Zuführbandes 12 in Transportrichtung (siehe Pfeil in Figur 1) der Fische hinter dem Auflege- bzw. Einlegebereich 13 der Fische auf das Zuführband 12 und vor der ersten Verarbeitungsmaschine 11 sind Mittel 20 zur Erkennung der Fische angeordnet. Das Mittel 20 ist als Sensor zur Registrierung und/oder Lageerkennung und/oder Erfassung geometrischer Daten der Fische ausgebildet. Aber auch andere übliche optische und mechanische Messeinrichtungen sind einsetzbar.

Im Bereich des Vorratstanks 14 ist ebenfalls ein Überwachungsmittel, das im vorliegenden Fall als Sensor 21 ausgebildet ist angeordnet. Der Sensor 21 dient zur Überwachung des Füllstandes des Vorratstanks 14 bzw. zur Mengenregulierung desselben.

Die Mittel 17 zur Übergabe können als aktives oder passives Förderelement ausgebildet sein. Auch eine Kombination aktiver und passiver Mittel ist einsetzbar. Im Ausführungsbeispiel gemäß Figur 1 ist das Mittel 17 als passives Förderelement 22 ausgebildet. Das bedeutet, dass die Fische selbsttätig, ohne zusätzliche Antriebsmittel oder Förderhilfen transportiert werden. Vorzugsweise ist das Förderelement 22 im wesentlichen aus einer Rutsche gebildet (siehe insbesondere Figuren 1 und 2). Die Rutsche ist etwa L-förmig ausgebildet und in zwei Ebenen geneigt, so dass jeder Fisch selbsttätig, im wesentlichen allein durch Schwerkraft, in seine endgültige Eingabeposition rutscht. Die Rutsche weist einen ersten Abschnitt 23 auf, der vorzugsweise aus einem glatten Blech oder dergleichen gebildet ist, auf dem die Fische einzeln dem zweiten Abschnitt 24 zugeführt werden. Der zweite Abschnitt 24 weist mehrere Aufnahmen 25 auf, wobei jede Aufnahme 25 zur Aufnahme eines einzelnen Fisches dient. Die Aufnahmen 25 sind derart angeordnet, dass die Fische mit ihrer Längsachse etwa parallel zur Längsachse der Verarbeitungsmaschine liegen. Mindestens die der Verarbeitungsmaschine 11 nächstliegende Aufnahme 25 ist so angeordnet, dass der Fisch unmittelbar im Bereich der Eingabeposition in die Verarbeitungsmaschine 11 parallel ausgerichtet ist. Die weiteren Aufnahmen 25 können auch fächerartig angeordnet sein.

Die Aufnahmen 25 im Abschnitt 24 der Rutsche sind durch Trennmittel voneinander getrennt. Die Trennmittel sind in der gezeigten Ausführung als schwenkbare Klappen 26 ausgebildet. Aber auch Schieber und andere bewegbare Elemente können zur Unterteilung in einzelnen Fächer dienen. Jede Aufnahme 25 weist ein Überwachungsmittel 45 auf, das zumindest das Vorhandensein und das Fehlen eines Fisches, also eine ja/nein-Abfrage, ermöglicht. Als Überwachungsmittel 45 können mechanische, optische oder andere übliche berührungslos oder berührend arbeitende Messmittel eingesetzt werden. Auch ist eine Aufnahme weiterer Messgrößen zusätzlich zur ja/nein-Abfrage möglich. Jede Aufnahme 25 weist eine Positionierungshilfe für die Fische auf, so dass diese, im gezeigten Beispiel gemäß Figur 1, Schwanz voraus in die Aufnahme gleiten und mittels der Positionierungshilfe lagegenau zur weiteren Verarbeitung in der Aufnahme 25 liegen. Die Positionierungshilfe dient gleichzeitig als Anschlag, so dass die Fische nicht aus der Aufnahme 25 herausrutschen.

Der Rutsche ist, vorzugsweise im Übergangsbereich vom Zuführband 12 auf den Abschnitt 23, ein Mittel zur Zuführung von Flüssigkeiten, nämlich insbesondere Wasser, mit Gleitmitteln angereichertes Wasser oder dergleichen, angeordnet, um den Transportvorgang über die Rutsche zu unterstützen.

Das gesamte Förderelement 22 ist mit einer Rechnereinheit zur Steuerung und/oder Regelung sämtlicher Komponenten verbunden. Insbesondere die Klappen 26 sind individuell ansteuerbar, wobei die Rechnereinheit des Förderelementes 22 mit der Rechnereinheit 47 der gesamten Anlage 10 in Wirkverbindung steht.

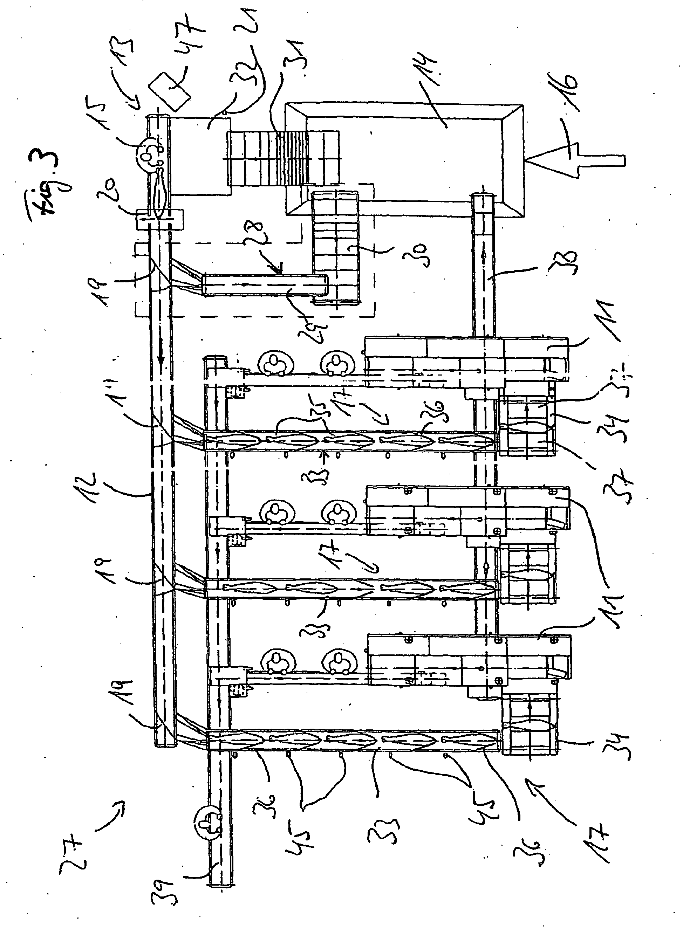

In Figur 3 ist eine weitere Ausführungsform einer erfindungsgemäßen Anlage 27 dargestellt. Im wesentlichen ist die Anlage 27 ähnlich zu der Anlage 10 aufgebaut, so dass für gleiche Teile die gleichen Bezugsziffern verwendet werden. Zusätzlich zu den Verarbeitungsmaschinen 11, dem Zuführband 12, dem Vorratstank 14 und der Transporteinrichtung 16 ist zwischen dem Mittel 20 zur Erkennung der Fische auf dem Zuführband 12 und der in Transportrichtung ersten Verarbeitungsmaschine 11 eine Rückführung 28, angeordnet, die sich von dem Zuführband 12 über eine Rutsche 29 und einen Förderer 30 in den Vorratstank 14 erstreckt. Die Rückführung 28 kann eine Rutsche, ein Band oder jedes andere bekannte Element sein. Im Ausführungsbeispiel gemäß Figur 3 ist der Vorratstank 14 über einen Förderer 31 mit einer Vorratsmulde 32 verbunden, aus der die Bedienperson 15 die Fische entnehmen kann. Durch diese Bypass-Anordnung ist es möglich, dass durch das Mittel 20 als fehlerhaft positioniert und/oder überzählig erkannte Fische in den Vorratstank 14 rückführbar sind. Das Mittel 20 dient weiterhin dazu, der Rechnereinheit 47 Informationen zu liefern, die sie zur Steuerung der Abweiser 19 benötigt.

Das Mittel 17 zur Übergabe in dieser Ausführungsform ist aus einem Vorratspuffer 33 und einer Eintakteinheit 34 gebildet. Die Eintakteinheit 34 ist in Transportrichtung der Fische hinter dem Vorratspuffer 33 angeordnet. Der Vorratspuffer 33 ist als Rutsche ausgebildet, so dass die Fische durch Schwerkraft auf der Schräge nach unter gleiten. Es ist allerdings auch möglich, dass der Vorratspuffer 33 als aktives Fördermittel, nämlich als kontinuierliches Förderband oder dergleichen ausgebildet ist. Die Eintakteinheit 34 ist optional als kontinuierliches Förderband, als Kassette, Trommelförderer oder anderes übliches Förderelement ausgebildet. Die Eintakteinheit 34 dient als Bindeglied zwischen dem Vorratspuffer 33 und der parallel zum Vorratspuffer 33 angeordneten Verarbeitungsmaschine 11 sowie als Positionierungshilfe für die Fische. Die verschachtelte Anordnung, bei der die Transportrichtung des Vorratspuffers 33 gegenläufig zur Transportrichtung der Verarbeitungsmaschinen 11 verläuft, führt zu einem geringen Flächenbedarf der Anlage 27.

Der Vorratspuffer 33 weist einzelne Taschen 35 auf, in die die Fisch in ihrer Längserstreckung gleiten. Schwenkbare Klappen 36 oder dergleichen trennen die einzelnen Taschen 35 voneinander. Im gezeigten Ausführungsbeispiel sind fünf Taschen 35 vorgesehen. Die Anzahl der Taschen 35 ist jedoch variabel. Am Ende des Vorratspuffers 33 erfolgt die Übergabe der Fische an die Eintakteinheit 34, wobei die Fische dann in der Eintakteinheit quer zu ihrer Längserstreckung gefördert werden. Die Eintakteinheit 34 ist derart geneigt ausgebildet, dass die Fische innerhalb der Eintakteinheit 34 Kopf voraus einfädeln und dann in Schwanzrichtung gegen einen Anschlag gleiten, so dass sie positioniert ausgerichtet sind. Die Eintakteinheit 34 bereitet die an der Verarbeitungsmaschine 11 Kopf voraus ankommenden Fische derart auf bzw. leitet diese um, dass die Fische in den Verarbeitungsmaschinen 11, die eine Positionierung Schwanz voraus erfordern, verarbeitet werden können. In der Eintakteinheit 34 sind ebenfalls mehrere Aufnahmen 37 ausgebildet, wobei alle Aufnahmen 37 stets bestückt sein müssen, da die Eintakteinheit 34 an den Takt der Verarbeitungsstation gekoppelt ist. Sämtliche Taschen 35 und vorzugsweise auch alle Aufnahmen 37 verfügen über Überwachungsmittel 45, wie sie bereits im Zusammenhang mit der Anlage 10 beschrieben wurden, um das Vorhandensein und/oder die Position und/oder weitere Daten der Fische zu überwachen.

Sämtliche Verarbeitungsmaschinen 11 sind mit einem weiteren Rückführband 38 verbunden, mit dem unbearbeitete Fische von den Verarbeitungsmaschinen 11 zum zentralen Vorratstank 14 geleitet werden können. In Transportrichtung hinter den Verarbeitungsmaschinen 11 sind Abführbänder 39 zur Nachbearbeitung sowie zur Qualitätskontrolle der geschlachteten und entweideten Fische angeordnet.

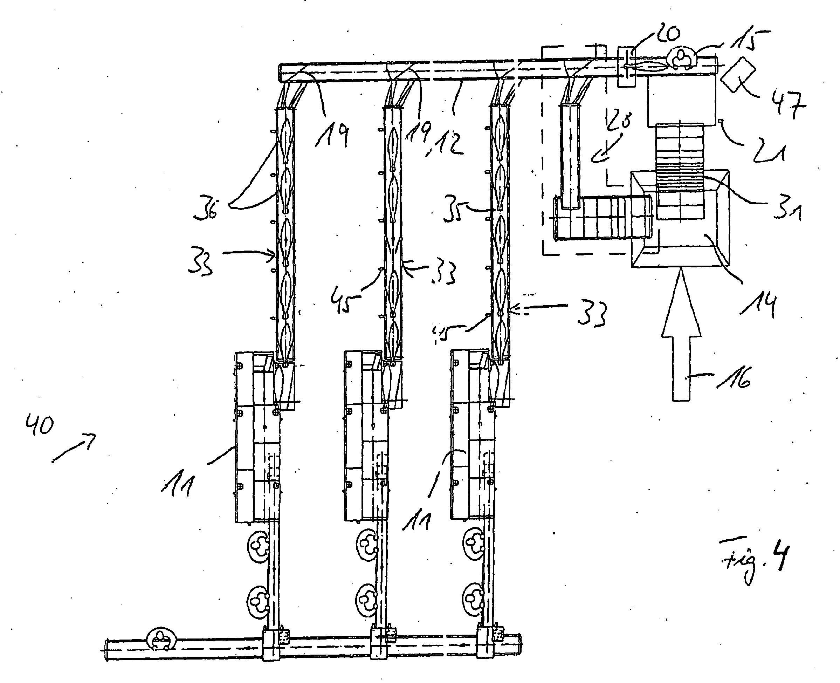

Die Ausführungsform der Anlage 40 gemäß der Figur 4 entspricht in wesentlichen Teilen der Anlage 27, so dass gleiche Teile mit den gleichen Bezugsziffern versehen sind. Im Gegensatz zur Anlage 27 besteht das Mittel 17 zur Übergabe lediglich aus dem Vorratspuffer 33, der die Fische Schwanz voraus unmittelbar den Verarbeitungsmaschinen 11 zuführt. Sowohl die Vorratspuffer als auch die Verarbeitungsmaschinen 11 weisen die gleiche Transportrichtung auf, so dass eine Umlenkung der Fische nicht erforderlich ist.

Die Erfindung beschränkt sich nicht auf die dargestellten Ausführungsformen. Vielmehr sind auch Anlagen mit unterschiedlich vielen Verarbeitungsmaschinen 11 denkbar, die wie in einem Bussystem parallel, versetzt oder schräg nebeneinander angeordnet sind, wobei die Verarbeitungsmaschinen 11 durch das gemeinsame Zuführband 12 miteinander verbunden sind. Die Anlagen können auch über weitere Signal- und Sicherheitselemente verfügen. Beispielsweise kann im Einführbereich 13 des Zuführbandes 12 ein optisches oder akustisches Signal vorgesehen sein, das der Bedienperson 15 signalisiert, dass keine weiteren Fische auf das Zuführband 12 gelegt werden sollen. Auch sind andere als die gezeigten Anordnungen der Maschinen 11 zueinander sowie der Maschinen 11 in Bezug auf das Zuführband 12 möglich.

Im folgenden wird der Verfahrensablauf der einzelnen Anlagen beschrieben: Das Verfahren dient zur Verarbeitung von Fischen insbesondere in einem Gewichtsbereich von etwa 2 bis 11 kg. Der zentrale Vorratstank 14 wird über die Transporteinrichtung 16 ausreichend mit Fischen versorgt, so dass die Bedienperson 15 die Fische kontinuierlich aus dem Vorratstank 14 bzw. der Vorratsmulde 32 entnehmen kann. Diese Vereinzelung der Fische beim Entnehmen erfolgt durch eine Bedienperson 15 für alle angeschlossenen Verarbeitungsmaschinen 11. Die Bedienperson 15 legt die Fische einzeln und ausgerichtet auf das Zuführband 12. Hierbei helfen entweder die Bandmarkierungen oder das Mittel 20, das fehlerhaft erkannte Fische ausschleust. In den gezeigten Ausführungsformen gemäß Figuren 1 und 4 ist die Fischposition Schwanz voraus und mit der Rückenflosse zur Bedienperson 15. Je nach Anwendung kann aber auch eine andere Positionierung gewählt werden. In Figur 3 beispielsweise werden die Fische Kopf voraus und Rückenflosse von der Bedienperson 15 abgewandt auf das Zuführband 12 gelegt. Das Mittel 20 zur Überwachung prüft die Fischposition und -lage. Je nach Vorgabe aus der Rechnereinheit bezüglich der erforderlichen Position/Lage, den erforderlichen geometrischen Daten und weiteren ermittelten Parametern, also nach Vergleich mit Solldaten bzw. Sollposition wird der Fisch bei positivem Ergebnis auf dem Zuführband 12 weitergefördert. Im Falle eines negativen Ergebnisses, also wenn der Fisch z.B. falsch positioniert oder fehlerhaft ist, wird der Fische mittels des Abweisers 19 auf die Rückführung 28 und von dieser zurück in den Vorratstank 14 geleitet.

Der auf dem Zuführband 12 in Richtung der Verarbeitungsmaschinen 11 weiter geleitete Fisch wird nun je nach Bedarf und Priorität - beides wird durch die Rechnereinheit im Zusammenspiel mit dem Mittel 20, den Überwachungsmitteln 45 und den übrigen Sensoren und dergleichen- durch die Abweiser 19 auf das Mittel 17 zur Übergabe gelenkt. Die üblicherweise geöffneten Abweiser 19, die einen Transport der Fische auf dem Zuführband 12 ermöglichen, werden kurzzeitig ausgeschwenkt, so dass der Fisch an der gewünschten Position durch die Schubbewegung und/oder den Impuls um etwa 90° gedreht und vom Zuführband 12 befördert wird. Je nach Anlage gelangt der Fisch dann auf das Förderelement 22 bzw. den Vorratspuffer 33. Bei der Ausführungsform gemäß Figur 1 sind die Klappen 26 sämtlicher Aufnahmen 25 üblicherweise geschlossen, so dass der Fisch in der jeweils ersten Aufnahme 25 kurz verharrt. Die Überwachungsmittel 45 erkennen das Vorhandensein des Fisches und melden dies der Rechnereinheit 47. Nach einer Beruhigungszeit des Fisches öffnen die Klappen 26 zur benachbarten, einen Schritt näher an der Verarbeitungsmaschine 11 gelegenen Aufnahme 25, wenn das Überwachungsmittel 45 die Aufnahme 25 wegen eines fehlenden Fisches freigegeben hat. Der Fisch rutscht dann eine Position weiter nach unten. So gelangen die Fische Schritt für Schritt unmittelbar in den Eingabebereich der Verarbeitungsmaschinen 11. Die Verarbeitungsmaschine 11 öffnet ihre eigene Eintaktklappe 46 (siehe Figur 2) in ihrem Arbeitstakt, so dass der unmittelbar vor der Eintaktklappe 46 liegende Fisch mit seiner Längsachse parallel zur Abwurfkante der Verarbeitungsmaschine 11 in diese fällt. Die Eintaktklappe 46 schließt unmittelbar nach der Fischabgabe und signalisiert das Fehlen eines Fisches. Mit anderen Worten bedeutet dies, dass die Verarbeitungsmaschinen 11 den Bedarf bestimmen bzw. vorgeben. Die Rechnereinheit steuert dann die Zuführung der Fische nach einem vorgegebenen Programm.

In den Anlagen 27 und 40 gemäß den Figuren 3 und 4 sind die Klappen 36 des Vorratspuffers 33 grundsätzlich geöffnet, so dass die Fische immer in die der Verarbeitungsmaschine 11 nächsten freien Tasche 35 rutschen bzw. gefördert werden. Der Vorratspuffer 33 wird also von der Verarbeitungsmaschine 11 beginnend aufgefüllt.

In der Anlage 40 gemäß Figur 4 werden die Fische unmittelbar aus dem Vorratspuffer 33 vor die Eintaktklappe 46 der Verarbeitungsmaschine 11 geführt. Die Förderung in dem Vorratspuffer 33 erfolgt entweder aktiv durch ein Förderband oder dergleichen oder passiv durch eine Rutsche. Bei dem Verfahren mit der Anlage 27 gemäß Figur 3 werden die Fische von dem Vorratspuffer 33 an die Eintakteinheit 34 übergeben, und zwar Kopf voraus. Die Fische prallen mit dem Kopf gegen einen Anschlag und rutschen durch die Neigung der Eintakteinheit 34 in Schwanzrichtung, bis sie ihre endgültige und definierte Position gefunden haben. Die Fische werden dann ebenfalls von Aufnahme 37 zu Aufnahme 37 geleitet, bis sie unmittelbar vor der Eintaktklappe 46 der Verarbeitungsmaschine 11 liegen. Entscheidend ist dabei, dass die Eintakteinheit 34 grundsätzlich vollständig bestückt sein muss, da sie anders als ein Speicher an den Takt der Verarbeitungsmaschine 11 gebunden ist.

Für den Fall, dass die Bedienperson 15 einen Leertakt erzeugt, wird dieser durch die Speicher- bzw. Vorratsfunktion des Förderelementes 22 und/oder des Vorratspuffers 33 ausgeglichen, so dass die Verarbeitungsmaschinen 11 kontinuierlich mit Fischen versorgt werden. Es besteht daher auch die Möglichkeit, das Auflegen und Ausrichten der Fische auf das Zuführband 12 vollautomatisch durchzuführen, so dass die Anlagen ohne permanente Bindung einer Bedienperson 15 an die Anlage arbeiten können.

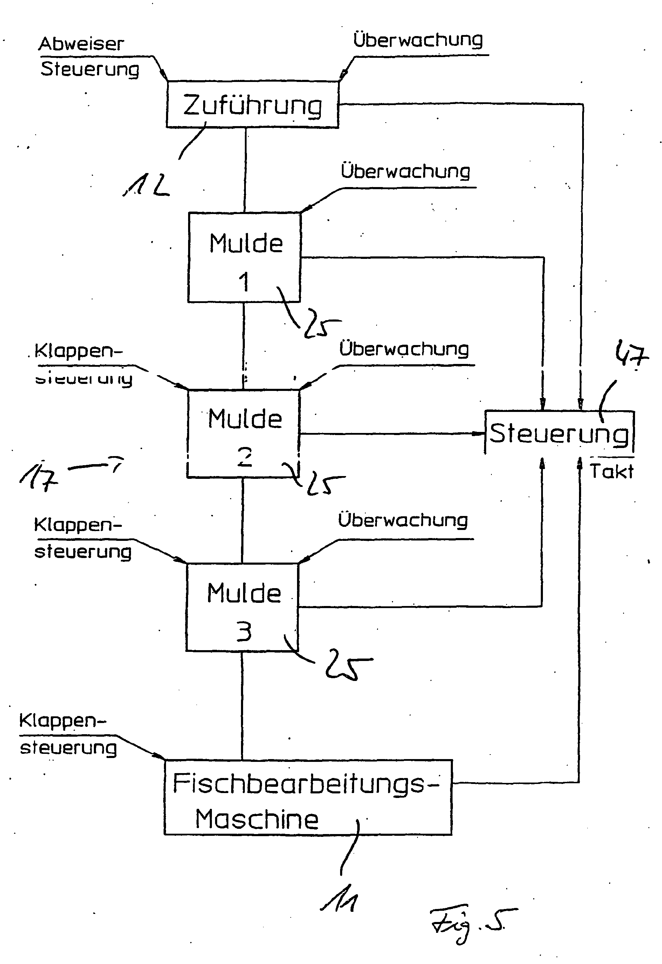

Anhand der Figur 5 ist noch einmal mit Bezug auf die Anlage 10 veranschaulicht, wie die Steuerung/Regelung der Anlage 10 bzw. der Zuführung zu den Verarbeitungsmaschinen 11 funktioniert. Die zentrale Steuerung ist sowohl mit dem Zuführungsband 12 (Zuführung in Figur 5) als auch mit der Verarbeitungsstation 11 (Fischbearbeitungsmaschine in Figur 5) verbunden. Zwischen dem Zuführband 12 und der Verarbeitungsstation 11 ist das Mittel 17 zur Übergabe angeordnet. Die Aufnahmen 25 (Mulden 1 bis 3 in Figur 5) sind ebenfalls mit der Steuerung verbunden. Anhand der aus den Überwachungsmitteln 20 und 45 übermittelten Daten und Informationen steuert die Steuerung den Ablauf der Anlage 10.

## Patentansprüche

1. Mittel zur Verknüpfung einer zentralen Zuiuhreinrichtung (12) mit einer Verarbeitungsmaschine (11) zum Verarbeiten von Fischen, wobei das Mittel (17) derart ausgebildet ist, dass die Fische von der Zuführeinrichtung (12) über das Mittel (17) zur jeweiligen Eingabeposition der Verarbeitungsrmaschine (11) gelangen, **dadurch gekennzeichnet, dass** das Mittel (17) aus einem Vorratspuffer (33) und einer Eintakteinheit (34) gebildet ist, wobei der Vorratspuffer (33) mehrere Taschen (35) aufweist und jede Tasche (35) zur Speicherung eines Fisches ausgebildet ist und die einzelnen Taschen (35) durch schwenkbare Klappen (36), Schieber oder dergleichen voneinander getrennt sind.

2. Mittel nach Anspruch 1, **dadurch gekennzeichnet, dass** der Vorratspuffer (33) als Rutsche ausgebildet ist.

3. Mittel nach Anspruch 1 oder 2, **dadurch gekennzeichnet, dass** der Vorratspuffer (33) als aktiv angetriebenes Fördermittel ausgebildet ist.

4. Mittel nach einem der Ansprüche 1 bis 3, **dadurch gekennzeichnet, dass** die Klappen (36), Schieber oder dergleichen einzeln ansteuerbar sind.

5. Mittel nach einem der Ansprüche 1 bis 4, **dadurch gekennzeichnet, dass** jeder Tasche (35) ein Überwachungsmittel (45) zugeordnet ist.

6. Mittel nach einem der Ansprüche 1 bis 5, **dadurch gekennzeichnet, dass** jede Tasche (35) Positionierungshilfen für den Fisch aufweist.

7. Mittel nach einem der Ansprüche 1 bis 6, **dadurch gekennzeichnet, dass** das Mittel (17) mit einer Rechnereinheit zur Steuerung und/oder Regelung sämtlicher Komponenten, insbesondere der Klappen (36), verbunden ist.

8. Mittel nach einem der Ansprüche 1 bis 7, **dadurch gekennzeichnet, dass** die Eintakteinheit (34) in Transportrichtung der Fische hinter dem Vorratspuffer (33) angeordnet ist.

9. Mittel nach einem der Ansprüche 1 bis 8, **dadurch gekennzeichnet, dass** in der Eintakteinheit (34) mehrere Aufnahmen (37) ausgebildet sind, wobei die Aufnahmen (37) vorzugsweise über Überwachungsmittel (45) verfügen.

10. Mittel nach einem der Ansprüche 1 bis 9, **dadurch gekennzeichnet, dass** der Vorratspuffer (33) zur Aufnahme und zum Transport der Fische in ihrer Längsrichtung Schwanz oder Kopf voraus ausgebildet ist.

11. Mittel nach einem der Ansprüche 1 bis 10, **dadurch gekennzeichnet, dass** die Eintakteinheit (34) als Kassette ausgebildet ist.

12. Mittel nach einem der Ansprüche 1 bis 11, **dadurch gekennzeichnet, dass** die Eintakteinheit (34) zum Transport der Fische in ihrer Querrichtung ausgebildet ist.

13. Mittel nach einem der Ansprüche 1 bis 12, **dadurch gekennzeichnet, dass** die Eintakteinheit (34) als Trommelförderer oder aktives Förderband ausgebildet ist, wobei Trommelförderer oder Förderband derart ausgebildet sind, dass die Fische mit ihrem Schwanzende an einer definierten Position liegen.

14. Anlage zum Aufbereiten und Verarbeiten von Fischen, insbesondere zum Schlachten und Entweiden derselben, im wesentlichen umfassend
a) eine Transporteinrichtung (16) für Fische,
b) einen zentralen Vorratstank (14) zur Aufnahme bzw. zum Sammeln der zugeführten Fische sowie
c) mindestens zwei Verarbeitungsmaschinen (11) zum Verarbeiten von Fischen,
d) eine zentrale Zuführeinrichtung (12) zum kontinuierlichen Zuführen der Fische zu jeder Verarbeitungsmaschine (11), wobei
e) die Zuführeinrichtung (12) im Bereich jeder Verarbeitungsmaschine (11) zum Verarbeiten der Fische Mittel (17) zur Übergabe der Fische von der Zuführeinrichtung (12) zu jeder Verarbeitungsmaschine (11) aufweist,
**dadurch gekennzeichnet, dass** das Mittel (17) nach einem der Ansprüche 1 bis 13 ausgebildet ist.

15. Anlage nach Anspruch 14, **dadurch gekennzeichnet, dass** mehrere Verarbeitungsmaschinen (11) zum Schlachten und Entweiden von Fischen parallel zueinander angeordnet sind, wobei die Verarbeitungsmaschinen (11) durch die zentrale Zuführeinrichtung, nämlich durch ein Zuführband (12) miteinander verbunden sind.

16. Anlage nach Anspruch 14 oder 15, **dadurch gekennzeichnet, dass** die Anlage (27, 40) über eine zentrale Rechnereinheit (47) zur Steuerung und/oder Regelung verfügt, mittels der sämtliche Komponenten nach Bedarf und/oder Priorität und/oder Position steuer- und/oder regelbar sind.

17. Anlage nach Anspruch 16, **dadurch gekennzeichnet, dass** die Rechnereinheit (47) bzw. Steuerung/Regelung frei programmierbar ist.

18. Anlage nach einem der Ansprüche 14 bis 17, **dadurch gekennzeichnet, dass** das Zuführband (12) steuer- und regelbare Abweiser (19) aufweist, mittels der die Fische von dem Zuführband (12) in Richtung der jeweils angesteuerten Verarbeitungsmaschine (11) lenkbar sind.

19. Anlage nach einem der Ansprüche 14 bis 18, **dadurch gekennzeichnet, dass** das Zuführband (12) Bandmarkierungen aufweist.

20. Anlage nach einem der Ansprüche 14 bis 19, **dadurch gekennzeichnet, dass** im Bereich des Zuführbandes (12) in Transportrichtung der Fische hinter der Auflegeposition der Fische auf das Zuführband (12) und vor der ersten Verarbeitungsmaschine (11) Mittel (20) zur Erkennung von Fischen angeordnet sind.

21. Anlage nach Anspruch 20, **dadurch gekennzeichnet, dass** das oder jedes Mittel (20) zur Erkennung als Sensor zur Registrierung und/oder zur Lageerkennung und/oder zur Erfassung geometrischer Daten der Fische ausgebildet ist.

22. Anlage nach einem der Ansprüche 14 bis 21, **dadurch gekennzeichnet, dass** zwischen dem Sensor (20) und der in Transportrichtung der Fische ersten Verarbeitungsmaschine (11) eine Rückführung (28) oder dergleichen angeordnet ist, mit dem durch den Sensor (20) als fehlerhaft positioniert und/oder überzählig erkannte Fische in den Vorratstank (14) rückführbar sind.

23. Anlage nach einem der Ansprüche 14 bis 22, **dadurch gekennzeichnet, dass** im Bereich des Vorratstanks (14) ein Überwachungsmittel (21) zur Mengenregulierung innerhalb des Vorratstanks (14) angeordnet ist.

24. Anlage nach einem der Ansprüche 14 bis 23, **dadurch gekennzeichnet, dass** jede Verarbeitungsmaschine (11) zum Schlachten und Entweiden an ein zentrales Abführband (39) angeschlossen ist.

25. Verfahren zur automatisierten Verarbeitung von Fischen, im wesentlichen umfassend die folgenden Schritte:
- Zufuhren und Sammeln der Fische in einem zentralen Vorratstank (14),
- Vereinzeln der Fische,
- manuelles Ausrichten der Fische in eine definierte Lage,
- automatisiertes Verarbeiten der Fische, wobei
- die Fische vor dem automatisierten Verarbeiten auf einer zentralen Zufuhreinrichtung (12) abgelegt und ausgerichtet und dann
- in den Bereich der ausgewählten Verarbeitungsmaschine (11) transportiert werden,
**dadurch gekennzeichnet, dass**
- die Fische durch einen Abweiser (19) von der Zuführeinhchtung (12) auf ein Mittel (17) zur Übergabe an die Verarbeitungsmaschine (11) gelenkt werden, wobei
- die Fische in einem Vorratspuffer (33) des Mittels (17) in einzelnen Aufnahmen (35), die durch schwenkbare Klappen (36), Schieber oder dergleichen voneinander getrennt sind, gespeichert werden, und
- die Fische dann nach Bedarf und Priorität über eine Eintakteinheit (34) des Mittels (17) aktiv zur jeweiligen Verarbeitungsmaschine (11) geschleust werden.

26. Verfahren nach Anspruch 25, **dadurch gekennzeichnet, dass** die Zufuhreinrichtung (12) mehrere Vorrichtungen (11) zum Schlachten und Entweiden versorgt.

27. Verfahren nach Anspruch 25 oder 26, **dadurch gekennzeichnet, dass** mittels Uberwachungsmitteln (20, 21, 45) sowie einer übergeordneten Rechnereinheit (47) zur Steuerung und/oder Regelung sämtlicher Komponenten anhand von Bedarfsmeldungen und/oder Prioritätsbefehlen der Zufiffireineinrichtung (12) und/oder der Verarbeitungsmaschinen (11) zum Schlachten und Entweiden und/oder Vorratspuffer (33) bestimmt wird, wo der jeweils nächste Fisch abgelegt wird.

28. Verfahren nach einem der Ansprüche 25 bis 27, **dadurch gekennzeichnet, dass** die einzelnen Komponenten, nämlich der Abweiser (19), schwenkbare Klappen (36) und dergleichen sowie die Bandgeschwindigkeit des Zufuhrbandes (12) separat und abgestimmt aufeinander gesteuert und geregelt werden.

29. Verfahren nach einem der Ansprüche 25 bis 28, **dadurch gekennzeichnet, dass** der Fisch aktiv in eine Aufnahme bzw. Tasche (35, 37) in dem Mittel (17) zur Übergabe gefordert wird, wobei ein Überwachungsmittel (45) das Vorhandensein bzw. Fehlen eines Fisches in der Aufnahme bzw. Tasche (35, 37) erkennt und entsprechende Befehle/Signale an die Rechnereinheit (47) zur Übermittlung des Bedarfs sendet.

30. Verfahren nach einem der Ansprüche 25 bis 29, **dadurch gekennzeichnet, dass** der Fisch nach einer Beruhigungszeit in eine nachfolgende Aufnahme (35) in Richtung der Verarbeitungsmaschine (11) geleitet wird, sofern das Überwachungsmittel (45) der nachfolgenden Aufnahme (35) Bedarf gemeldet hat.

31. Verfahren nach einem der Ansprüche 25 bis 30, **dadurch gekennzeichnet, dass** der Fisch innerhalb des Vorratspuffers (33) soweit wie möglich nach unten in Richtung der Verarbeitungsmaschine (11) gefördert wird bzw. rutscht, wobei die grundsätzlich geöffneten Klappen (36) erst schließen, wenn die in Transportrichtung vorhergehende Tasche (35) belegt ist.

32. Verfahren nach einem der Ansprüche 25 bis 31, **dadurch gekennzeichnet, dass** der Fisch schrittweise unmittelbar bis vor die Eintakteinheit bzw. Eintaktklappe (46) der Verarbeitungsmaschine (11) geleitet wird.

33. Verfahren nach Anspruch 32, **dadurch gekennzeichnet, dass** der Fisch nach dem Öffnen der Eintaktklappe (46) mit seiner Längsachse parallel zur Abwurfkante der Verarbeitungsmaschine (11) in diese fällt.

## Claims

1. Means for linking a central delivery device (12) to a processing machine (11) for processing fish, wherein the means (17) are designed in such a way that the fish pass from the delivery device (12) via the means (17) to the respective input position of the processing machine (11), **characterized in that** the means (17) is composed of a storage buffer (33) and a single-stroke unit (34), wherein the storage buffer (33) comprises several compartments (35), and each compartment (35) is designed for the storage of one fish, and the individual compartments (35) are separated from each other by pivotable flaps (36), slides or the like.

2. Means according to claim 1, **characterized in that** the storage buffer (33) is designed as a chute.

3. Means according to claim 1 or 2, **characterized in that** the storage buffer (33) is designed as an actively driven conveying means.

4. Means according to any one of claims 1 to 3, **characterised in that** the flaps (36), slides or the like are individually controllable.

5. Means according to any one of claims 1 to 4, **characterised in that** associated with each compartment (35) is a monitoring means (45).

6. Means according to any one of claims 1 to 5, **characterised in that** each compartment (35) comprises positioning aids for the fish.

7. Means according to any one of claims 1 to 6, **characterised in that** the means (17) is connected to a computer unit for the control and/or regulation of all components, in particular the flaps (36).

8. Means according to any one of claims 1 to 7, **characterised in that** the single-stroke unit (34), wherein the single-stroke unit (34) is arranged behind the storage buffer (33) in the direction of transport of the fish.

9. Means according to any one of claims 1 to 8, **characterized in that** several receptacles (37) are designed in the single-stroke unit (34), wherein the receptacles (37) preferably have a monitoring means (45).

10. Means according to any one of claims 1 to 9, **characterised in that** the storage buffer (33) is designed for holding and for transport of the fish tail or head first in their longitudinal direction.

11. Means according to any one of claims 1 to 10, **characterised in that** the single-stroke unit (34) is designed as a cassette.

12. Means according to any one of claims 1 to 11, **characterised in that** the single-stroke unit (34) is designed for transport of the fish in their transverse direction.

13. Means according to any one of claims 1 to 12, **characterised in that** the single-stroke unit (34) is designed as a drum conveyor or active conveyor belt, wherein drum conveyor or conveyor belt are designed in such a way that the fish lie with their tail end in a predefined position.

14. Installation for the preparation and processing of fish, in particular for the slaughter and gutting thereof, essentially including
a) a transport device (16) for fish,
b) a central storage tank (14) for holding or for collecting the fish delivered, and
c) at least two processing machines (11) for processing fish,
d) a central delivery device (12) for continuously delivering the fish to each processing machine (11), wherein
e) the delivery device (12) comprises, in the region of each processing machine (11) for processing the fish, means (17) for transfer of the fish from the delivery device (12) to each processing machine (11),
**characterized in that** the means (17) is designed according to any one of claims 1 to 13.

15. Installation according to claim 14, **characterised in that** several processing machines (11) for slaughtering and gutting fish are arranged parallel to each other, wherein the processing machines (11) are connected to each other by the central delivery device, namely by a delivery belt (12).

16. Installation according to claim 14 or 15, **characterised in that** the installation (27, 40) has a central computer unit (47) for control and/or regulation, by means of which all components can be controlled and/or regulated according to demand and/or priority and/or position.

17. Installation according to claim 16, **characterised in that** the computer unit (47) or control/regulation system is freely programmable.

18. Installation according to any one of claims 14 to 17, **characterised in that** the delivery belt (12) has controllable and regulatable deflectors (19) by means of which the fish can be deflected from the delivery belt (12) in the direction of the processing machine (11) being controlled at the time.

19. Installation according to any one of claims 14 to 18, **characterised in that** the delivery belt (12) has belt markings.

20. Installation according to any one of claims 14 to 19, **characterised in that** in the region of the delivery belt (12), behind the position of laying the fish on the delivery belt (12) in the direction of transport of the fish and before the first processing machine (11) are arranged means (20) for detecting fish.

21. Installation according to claim 20, **characterised in that** the or each means (20) is designed as a sensor for recording and/or for detecting the position and/or for gathering geometrical data of the fish.

22. Installation according to any one of claims 14 to 21, **characterised in that** between the sensor (20) and the first processing machine (11) in the direction of transport of the fish is arranged a return device (28) or the like with which fish which are detected by the sensor (20) as being incorrectly positioned and/or surplus can be returned to the storage tank (14).

23. Installation according to any one of claims 14 to 22, **characterised in that** in the region of the storage tank (14) is arranged a monitoring means (21) for quantitative regulation inside the storage tank (14).

24. Installation according to any one of claims 14 to 23, **characterised in that** each processing machine (11) for slaughtering and gutting is connected to a central discharge belt (39).

25. Method for the automated processing of fish, essentially including the following steps:
- delivery and collection of the fish in a central storage tank (14),
- separation of the fish,
- manual alignment of the fish into a predefined position,
- automated processing of the fish, wherein
- before automated processing the fish are laid on a central delivery device (12) and aligned and then
- transported into the region of the selected processing machine (11),
**characterized in that**
- the fish are steered by a deflector (19) from the delivery device (12) onto a means (17) for transfer to the processing machine (11), wherein
- the fish in a storage buffer (33) of the means (17) are stored in individual receptacles (35) which are separated from each other by pivotable flaps (36), slides or the like, and
- the fish are then actively fed via a single-stroke unit (34) of the means (17) to the respective processing machine (11) according to request and priority.

26. Method according to claim 25, **characterised in that** the delivery device (12) supplies several apparatuses (11) for slaughtering and gutting.

27. Method according to claim 25 or 26, **characterised in that** with monitoring means (20, 21, 45) and a master computer unit (47) for the control and/or regulation of all components with reference to demand messages and/or priority commands of the delivery device (12) and/or the processing machines (11) for slaughtering and gutting and/or storage buffers (33), it is determined where the next fish is deposited each time.

28. Method according to any one of claims 25 to 27, **characterised in that** the individual components, namely in particular the deflectors (19), pivotable flaps (36) and the like as well as the belt speed of the delivery belt (12) are controlled and regulated separately and in co-ordination with each other.

29. Method according to any one of claims 25 to 28, **characterised in that** the fish is conveyed actively into a receptacle or compartment (35, 37) in the means (17) for transfer, wherein a monitoring means (45) detects the presence or absence of a fish in the receptacle or compartment (35, 37) and sends corresponding commands/signals to the computer unit (47) for transmission of the demand.

30. Method according to any one of claims 25 to 29, **characterised in that** after a calming period the fish is guided into a subsequent receptacle (35) in the direction of the processing machine (11), provided that the monitoring means (45) of the subsequent receptacle (25) has indicated a demand.

31. Method according to any one of claims 25 to 30, **characterised in that** the fish inside the storage buffer (33) is conveyed or slides downwards as far as possible in the direction of the processing machine (11), wherein the flaps (36), which are basically open, close only when the preceding compartment (35) in the direction of transport is occupied.

32. Method according to any one of claims 25 to 31, **characterised in that** the fish is guided stepwise to a point immediately in front of the single-stroke unit or single-stroke flap (46) of the processing machine (11).

33. Method according to claim 32, **characterised in that**, after opening of the single-stroke flap (46), the fish drops into the processing machine (11) with its longitudinal axis parallel to the discharge edge of the processing machine (11).

## Revendications

1. Moyen destiné à combiner un dispositif d'acheminement central (12) avec une machine de traitement (11) destinée à traiter des poissons, le moyen (17) étant conçu de telle sorte que les poissons parviennent du dispositif d'acheminement (12) jusqu'à la position d'introduction respective de la machine de traitement (11) par l'intermédiaire du moyen (17), **caractérisé en ce que** le moyen (17) est constitué d'un dispositif de stockage intermédiaire (33) et d'une unité de synchronisation (34), le dispositif de stockage intermédiaire (33) comprenant plusieurs poches (35) et chaque poche (35) étant conçue pour stocker un poisson et les poches individuelles (35) étant séparées les unes des autres par des clapets pivotants (36), des coulisseaux ou similaire.

2. Moyen selon la revendication 1, **caractérisé en ce que** le dispositif de stockage intermédiaire (33) est conçu comme une goulotte.

3. Moyen selon la revendication 1 ou 2, **caractérisé en ce que** le dispositif de stockage intermédiaire (33) est conçu comme un moyen de transport entraîné de façon active.

4. Moyen selon l'une quelconque des revendications 1 à 3, **caractérisé en ce que** les clapets (36), les coulisseaux ou similaires peuvent être commandés individuellement.

5. Moyen selon l'une quelconque des revendications 1 à 4, **caractérisé en ce qu'**un moyen de surveillance (45) est associé à chaque poche (35).

6. Moyen selon l'une quelconque des revendications 1 à 5, **caractérisé en ce que** chaque poche (35) comprend des dispositifs d'aide au positionnement pour le poisson.

7. Moyen selon l'une quelconque des revendications 1 à 6, **caractérisé en ce que** le moyen (17) est relié à une unité de calcul destinée à commander et/ou réguler tous les composants, en particulier les clapets (36).

8. Moyen selon l'une quelconque des revendications 1 à 7, **caractérisé en ce que** l'unité de synchronisation (34) est disposée dans la direction de transport des poissons derrière le dispositif de stockage intermédiaire (33).

9. Moyen selon l'une quelconque des revendications 1 à 8, **caractérisé en ce que** plusieurs réceptacles (37) sont conçus dans l'unité de synchronisation (34), les réceptacles (37) disposant de préférence de moyens de surveillance (45).

10. Moyen selon l'une quelconque des revendications 1 à 9, **caractérisé en ce que** le dispositif de stockage intermédiaire (33) est conçu pour réceptionner et transporter les poissons dans leur direction longitudinale la queue en avant ou tête la première.

11. Moyen selon l'une quelconque des revendications 1 à 10, **caractérisé en ce que** l'unité de synchronisation (34) est conçue comme une cassette.

12. Moyen selon l'une quelconque des revendications 1 à 11, **caractérisé en ce que** l'unité de synchronisation (34) est conçue pour transporter les poissons dans leur direction transversale.

13. Moyen selon l'une quelconque des revendications 1 à 12, **caractérisé en ce que** l'unité de synchronisation (34) est conçue comme un convoyeur à tambour ou une bande de transport active, le convoyeur à tambour ou la bande de transport étant conçu(e) de telle sorte que l'extrémité de la queue des poissons se situe dans une position définie.

14. Installation de préparation et traitement de poissons, destinée en particulier à les abattre et à les évider, comportant sensiblement
a) un dispositif de transport (16) pour les poissons,
b) un réservoir central de stockage (14) destiné à réceptionner et/ou collecter les poissons acheminés et
c) au moins deux machines de traitement (11) destinées à traiter le poisson,
d) un dispositif central d'acheminement (12) destiné à acheminer en continu les poissons vers chaque machine de traitement (11),
e) le dispositif d'acheminement (12) comprenant dans la zone de chaque machine de traitement (11) destinée à traiter les poissons un moyen (17) destiné à transférer les poissons du dispositif d'acheminement (12) vers chaque machine de traitement (11),
**caractérisée en ce que** le moyen (17) est conçu selon l'une quelconque des revendications 1 à 13.

15. Installation selon la revendication 14, **caractérisée en ce que** plusieurs machines de traitement (11) destinées à abattre et évider les poissons sont disposées parallèlement les unes aux autres, les machines de traitement (11) étant reliées les unes aux autres par le dispositif d'acheminement central, en fait par une bande d'acheminement (12).

16. Installation selon la revendication 14 ou 15, **caractérisée en ce que** l'installation (27, 40) dispose d'une unité centrale de calcul (47) de commande et/ou régulation permettant de commander et/ou réguler tous les composants en fonction du besoin et/ou de la priorité et/ou de la position.

17. Installation selon la revendication 16, **caractérisée en ce que** l'unité de calcul (47) et/ou la commande/régulation peut être programmée librement.

18. Installation selon l'une quelconque des revendications 14 à 17, **caractérisée en ce que** la bande d'acheminement (12) comprend des déflecteurs (19) pouvant être commandés et régulés et permettant de diriger les poissons de la bande d'acheminement (12) en direction de la machine de traitement (11) respectivement commandée.

19. Installation selon l'une quelconque des revendications 14 à 18, **caractérisée en ce que** la bande d'acheminement (12) comprend des marquages.

20. Installation selon l'une quelconque des revendications 14 à 19, **caractérisée en ce que** des moyens (20) destinés à détecter les poissons sont disposés dans la zone de la bande d'acheminement (12) dans la direction de transport des poissons derrière la position de dépôt des poissons sur la bande d'acheminement (12) et devant la première machine de traitement (11).

21. Installation selon la revendication 20, **caractérisée en ce que** le ou chaque moyen de détection (20) est conçu comme un capteur d'enregistrement et/ou de détection de position et/ou de détection de données géométriques des poissons.

22. Installation selon l'une quelconque des revendications 14 à 21, **caractérisée en ce qu'**un guide de retour (28) ou similaire permettant de ramener dans le réservoir de stockage (14) les poissons détectés par le capteur (20) comme étant mal positionnés et/ou en surnombre est disposé entre le capteur (20) et la première machine de traitement (11) dans la direction de transport des poissons.

23. Installation selon l'une quelconque des revendications 14 à 22, **caractérisée en ce qu'**un moyen de surveillance (21) destiné à réguler la quantité à l'intérieur du réservoir de stockage (14) est disposé dans la zone du réservoir de stockage (14).

24. Installation selon l'une quelconque des revendications 14 à 23, **caractérisée en ce que** chaque machine de traitement (11) destinée à l'abattage et à l'évidage est raccordée à une bande centrale d'évacuation (39).

25. Procédé de traitement automatique de poissons, comportant sensiblement les étapes suivantes consistant à :
- acheminer et collecter les poissons dans un réservoir central de stockage (14),
- séparer les poissons,
- orienter les poissons à la main dans une position définie,
- traiter automatiquement les poissons,
- les poissons étant déposés et orientés sur un dispositif d'acheminement central (12) avant le traitement automatique puis
- transportés dans la zone de la machine de traitement (11) sélectionnée,
**caractérisé en ce que**
- les poissons sont dirigés du dispositif d'acheminement (11) par un déflecteur (19) du dispositif d'acheminement (12) sur un moyen (17) de transfert sur la machine de traitement (11),
- les poissons étant stockés dans un dispositif de stockage intermédiaire (33) du moyen (17) dans des réceptacles individuels (35) séparés les uns des autres par des clapets pivotants (36), des coulisseaux ou similaires, et
- les poissons étant ensuite évacués de manière active en direction de la machine de traitement (11) respective en fonction du besoin et de la priorité par une unité de synchronisation (34) du moyen (17).

26. Procédé selon la revendication 25, **caractérisé en ce que** le dispositif d'acheminement (12) alimente plusieurs dispositifs (11) destinés à l'abattage et à l'évidement.

27. Procédé selon la revendication 25 ou 26, **caractérisé en ce que** des moyens de surveillance (20, 21, 45) et une unité de calcul prioritaire (47) destinée à commander et/ou réguler tous les composants d'après les informations de besoin et/ou les ordres de priorité du dispositif d'acheminement (12) et/ou des machines de traitement (11) destinées à l'abattage et à l'évidage et/ou des dispositifs de stockage intermédiaire (33) permettent de définir l'endroit où sera déposé le poisson respectivement suivant.

28. Procédé selon l'une quelconque des revendications 25 à 27, **caractérisé en ce que** les composants individuels, en fait le déflecteur (19), les clapets pivotants (36) et similaires ainsi que la vitesse de la bande d'acheminement (12) sont commandés et régulés de façon séparée et adaptée les unes aux autres.

29. Procédé selon l'une quelconque des revendications 25 à 28, **caractérisé en ce que** le poisson est transporté de façon active dans un réceptacle et/ou une poche (35, 37) dans le moyen de transfert (17), un moyen de surveillance (45) détectant la présence et/ou l'absence d'un poisson dans le réceptacle et/ou la poche (35, 37) et envoyant des ordres/signaux correspondants à l'unité de calcul (47) pour communiquer le besoin.

30. Procédé selon l'une quelconque des revendications 25 à 29, **caractérisé en ce que** le poisson est transporté après un temps de repos dans un réceptacle (35) suivant en direction de la machine de traitement (11), à moins que le moyen de surveillance (45) du réceptacle (35) suivant ait signalé un besoin.

31. Procédé selon l'une quelconque des revendications 25 à 30, **caractérisé en ce que** le poisson est transporté et/ou glisse à l'intérieur du dispositif de stockage intermédiaire (33) le plus loin possible vers le bas en direction de la machine de traitement (11), les clapets (36) en principe ouverts ne se fermant que lorsque la poche (35) précédente dans la direction de transport est garnie.

32. Procédé selon l'une quelconque des revendications 25 à 31, **caractérisé en ce que** le poisson est dirigé peu à peu directement jusqu'à se trouver devant l'unité de synchronisation et/ou le clapet de synchronisation (46) de la machine de traitement (11).

33. Procédé selon la revendication 32, **caractérisé en ce que** le poisson, une fois le clapet de synchronisation (46) ouvert, tombe avec son axe longitudinal parallèlement à l'arête d'éjection de la machine de traitement (11) dans cette dernière.
